# EUROPÄISCHE PATENTSCHRIFT

(11) **EP 1 033 562 B1**
(45) Veröffentlichungstag und Bekanntmachung des Hinweises auf die Patenterteilung: **22.01.2003**
(21) Anmeldenummer: 00104300.9
(22) Anmeldetag: 02.03.2000
(51) Int. Cl.: G01M 17/02, G01M 1/30

(54) **Verfahren zur Verringerung von durch eine Radeinheit eines Fahrzeuges hervorgerufenen Vibrationen und Einrichtung hierzu**
Procedure and device for reducing the vibrations provoked by a wheel-unit of a vehicle
Procédé et dispositif de réduction des vibrations provoquées par une roue de véhicule

(30) Priorität: 03.03.1999 DE 19909162
(43) Veröffentlichungstag der Anmeldung: 06.09.2000
(73) Patentinhaber: Schenck RoTec GmbH, 64293 Darmstadt (DE)
(72) Erfinder: Schönfeld, Harald, 64291 Darmstadt (DE)
(74) Vertreter: Brandt, Ernst-Ulrich, Dipl.-Phys., Dipl.-Ing.

(56) Entgegenhaltungen:
- EP-A- 0 671 621
- WO-A-88/03866
- US-A- 4 655 080
- US-A- 5 003 819

## Beschreibung

Die Erfindung betrifft ein Verfahren nach dem Patentanspruch 1 sowie eine Einrichtung nach dem Patentanspruch 6.

Die Radeinheiten eines Fahrzeuges stützen über zwischengeschaltete Feder/Dämpfungseinrichtungen die gefederte Masse eines Fahrzeugs ab und sind dabei über Lenker geführt. Die Radeinheit besteht im wesentlichen aus Radfelge und Reifen. Unregelmäßigkeiten im Reifen, wie örtliche Elastizitätsunterschiede, Maßabweichungen oder Unwuchten können neben Unregelmäßigkeiten der Feige und Eigenschaften der Einheit Radfelge/Reifen Ursache für unerwünschte Vibrationen an Fahrzeugteilen sein. Als besonders störend macht sich dies am Lenkrad des Fahrzeugs bemerkbar.

Es hat unterschiedliche Versuche gegeben, die Vibrationen auf ein tolerierbares Maß zu verringern bzw. ganz zu beseitigen. Im allgemeinen wird heute die Einheit Radfelge/Reifen auf konventionellen Auswuchtmaschinen dynamisch ausgewuchtet oder die Radeinheit im montierten Zustand am Fahrzeug ausgewuchtet.

Das Auswuchten kann ergänzt werden um eine vorhergehende Optimierung der Radfelge/Reifen-Einheit in Hinblick auf geometrische Eigenschaften oder Materialgegebenheiten. Hierdurch wird berücksichtigt, daß sowohl die Feige als auch der Reifen sowie die aus diesen gebildete Radeinheit einen radialen und transversalen Schlag aufweisen können und die Federungseigenschaften des Reifens örtlich unterschiedlich sein können. In der US 4,244,416 ist ein Verfahren beschrieben, bei dem zunächst ein eventuell erforderliches Abschleifen des Reifens an Stellen erfolgt, die aufgrund des Radialschlages des auf der Felge montierten von einer Belastungsrolle belasteten Reifens bestimmt werden und bei dem anschließend die Radfelge/Reifen-Einheit mittels einer dynamischen Auswuchtvorrichtung ausgewuchtet wird.

Aus der DE 41 43 543 A1 ist ein Verfahren bekannt, bei dem die Radfelge/Reifen-Einheit auf einer Radauswuchtmaschine angeordnet wird, der Radialschlag der Radfelge gemessen und der Radialschlag der Radfelge/Reifen-Einheit unter konstanter Belastung bei etwa 60 Umdrehungen der Radfelge/Reifen-Einheit pro Minute bestimmt wird. Die konstante Belastung erfolgt über das Andrücken einer Belastungsrolle. Es wird festgestellt, ob ein Verdrehen der Reifenposition in Umfangsrichtung auf der Radfelge zu Verbesserungen führt und ob ein Schleifen am Reifenumfang Verbesserungen bringt und diese Maßnahmen werden gegebenenfalls durchgeführt. Schließlich wird die Radfelge/Reifen-Einheit noch ausgewuchtet.

Aus der US 4,665,080 ist ein Verfahren zur Verringerung von durch eine Radeinheit eines Fahrzeugs hervorgerufenen Vibrationen bekannt, bei dem die Radeinheit in einer Meßeinrichtung zur Ermittlung von Schwingungen auf einer Achse rotierbar gelagert wird und mittels einer federnd abgestützten Belastungseinrichtung definiert kraftbeaufschlagt wird. Die Meßeinrichtung weist Sensoren auf, mit denen Schwingungen der nicht rotierenden Achse und senkrecht auf das Radprofil wirkende Kräfte erfaßt werden. Die Achse ist Teil der Belastungseinrichtung, die die Radeinheit gegen eine Antriebstrommel als Gegenlager drückt und die so ausgebildet ist, daß die Gewichtsbelastung, die beim Fahrzeug auftritt, simuliert wird. Aus den in einem Drehzahlbereich, in dem im Fahrbetrieb Vibrationen auftreten können, ermittelten Messwerten werden Kompensationsmassen zur Verringerung der Vibrationen nach Größe und Winkellage bestimmt.

Der Erfindung liegt die Aufgabe zugrunde, ein Verfahren und eine Einrichtung zur Verringerung von durch eine Radeinheit eines Fahrzeugs hervorgerufenen Vibrationen zu schaffen, das die tatsächlichen Verhältnisse am Fahrzeug optimal berücksichtigt.

Diese Aufgabe wird mit den Merkmalen des Patentanspruchs 1 bzw. des Patentanspruchs 6 gelöst.

Erstmals werden mit der Erfindung die im Fahrbetrieb eines Fahrzeuges vorliegenden Verhältnisse umfassend berücksichtigt und zwecks Verringerung von Vibrationen nicht nur auf den z.B. lastfreien Zustand oder den Zustand infolge Gewichtsbelastung beim Auswuchten eines Fahrzeugrades abgestellt. Der Erfindung liegt die Erkenntnis zugrunde, daß neben der Radaufhängung auch die beteiligten trägen Massen und Drehmassen und die Verformung des Reifens an seiner Aufstandsfläche zu berücksichtigen sind, da ihre Berücksichtigung entscheidenden Einfluß auf die Güte der erzielbaren Vibrationsverringerung hat. Dabei kann diesen Faktoren je nach den Umständen des Einzelfalls unterschiedliche Bedeutung für die Erzielung des gewünschten Ergebnisses zugeordnet werden; sie können aber ggf. auch als gleichgewichtig zu werten sein. Steifigkeitsunterschiede des Reifens können beispielsweise Vibrationen hervorrufen, die in ihrer Größenordnung den von auszugleichenden Unwuchten beim belastungsfreien dynamischen Auswuchten entsprechen. Durch z.B. Berücksichtigung der Drehmasse des Fahrzeugrades bei den Messungen werden die sich bei der Vibrationsentstehung überlagernden Einflüsse von Steifigkeitsunterschieden und Massenträgheitsmoment des Fahrzeugsrades berücksichtigt. Durch die Berücksichtigung der trägen Masse der Radeinheit samt ungefederter Anbauteile (Nabe und Bremse, Radträger) und der Federrate und Dämpfung der Radaufhängung werden die realen Gegebenheiten, bei denen Vibrationen nicht merkbar sein sollen, berücksichtigt. Gemessen wird vorzugsweise bei einer Drehzahl, die im wesentlichen der Fahrzeuggeschwindigkeit, bei der kritische Vibrationserscheinungen auftreten, entspricht. Es können jedoch erforderlichenfalls auch mehrere Drehzahlen oder ein Drehzahlbereich untersucht werden. Erfindungsgemäß ist die Belastungseinrichtung so ausgelegt und wirkt so auf die auszumessende Radeinheit ein, daß die Aufstandsverhältnisse des Fahrzeugrades auf der Fahrbahnoberfläche durch eine flächenhafte Beaufschlagung des Reifenumfangs optimal nachgebildet wird. Die Abstützung der Belastungseinrichtung ist der Radaufhängung des Fahrzeugrades nachgebildet. Die träge Masse der Belastungseinrichtung entspricht der ungefederten Masse der Radeinheit samt ungefederter Anbauteile (Nabe und Bremse, Radträger). Um die Drehverhältnisse erfassen zu können, ist die Belastungseinrichtung mit zumindest einem rotierbaren Belastungselement in Rollenform versehen, deren effektive Drehmasse der auf den Laufflächenradius reduzierten Drehmasse der rotierenden Teile des Fahrzeugrades entspricht.

Vorteilhaft ist eine Ausgestaltung, bei der die Anpreßkraft der Belastungseinrichtung zur Nachbildung des Verhältnisses am Fahrzeug gesteuert wird, da so die Verhältnisse während einer Fahrzeugfahrt nachgebildet werden können.

Setzt man die Anpreßkraft gleich Null, was einem Außerkontaktbringen der Belastungseinrichtung mit der Reifenlauffläche entspricht, kann man mit der Auswuchtmaschine herkömmliche belastungsfreie dynamische Auswuchtungen vornehmen.

Besonders vorteilhaft ist eine Ausgestaltung, bei der die Rollen in einem Rollenschuh gelagert sind und Drehachsen aufweisen, die parallel zur Drehachse der Radeinheit ausrichtbar sind. Durch Drehen des Rollenschuhs um eine durch die Belastungsrichtung gebildete Achse lassen sich Verhältnisse nachbilden, die vom Geradeauslauf des Fahrzeugrades abweichen.

Durch die vorteilhafte Ausgestaltung nach Patentanspruch 10 wird eine sehr kompakte Anordnung bei möglichst großem Rollendurchmesser der die Reifenlauffläche in einer Ebene berührenden Rollenabschnitte und eine Berührung an vielen Stellen erreicht, so daß die Fahrbahnfläche optimal nachgebildet ist.

Wenn die Abschnitte größeren Durchmessers durch drehbare Rollringe gebildet sind, können in einfacher Weise handelsübliche Kugel- oder Rollenlager eingesetzt werden, deren Außenringe die Rollringe bilden.

Dadurch daß mehreren Rollen bezüglich ihres Drehverhaltens gekoppelt werden, läßt sich die effektive Drehmasse leichter und genauer festlegen.

Ein Eindrehen der Radeinheit in eine bestimmte Position läßt sich einfach und genau durch Drehen einer Rolle mittels separatem Antrieb verwirklichen; ein Drehen mittels des Antriebsmotors für die Auswuchtmaschine kann entfallen.

Die Ausgestaltung nach den Patentansprüchen 20 und 21 ermöglicht mit den ohnehin vorhandenen Einrichtungen eine einfache Bestimmung des Radialschlages der Radeinheit unter Belastung.

Die Erfindung wird nachfolgend anhand der Zeichnung näher erläutert.

Es zeigen:
- Fig. 1: eine Ansicht der erfindungsgemäßen Einrichtung
- Fig. 2: die Darstellung gemäß Schnitt A-A in Fig. 1
- Fig. 3: eine Draufsicht auf die Rollen des Rollenschuhs

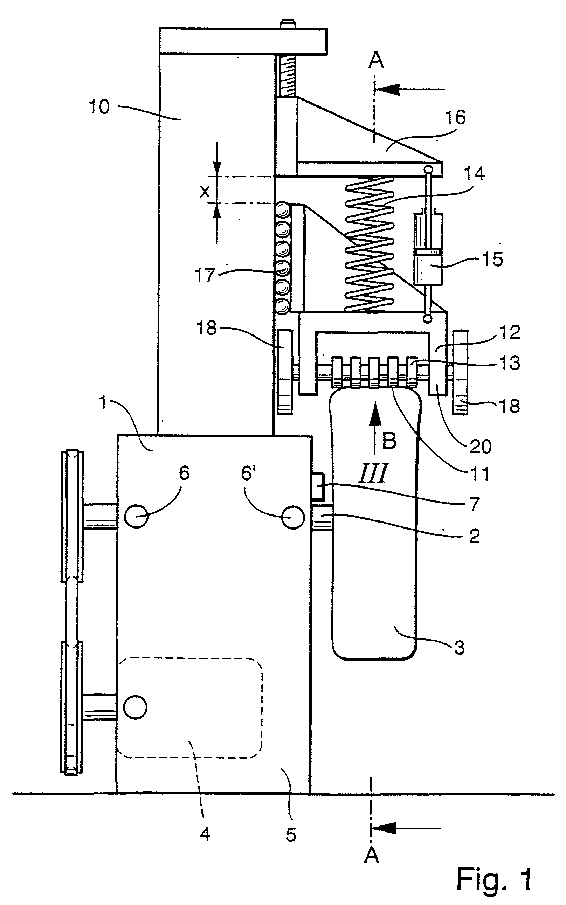

Die Einrichtung zur Verringerung von durch eine Radeinheit eines Fahrzeugs hervorgerufenen Vibrationen nach Fig. 1 umfaßt eine Meßeinrichtung 1 zur Bestimmung von Schwingungen, die in vorteilhafter Weise als übliche Auswuchtmaschine ausgebildet ist. Die Auswuchtmaschine umfaßt dabei eine rotierbare Wuchtspindel 2, auf der die Radeinheit 3 (Radfelge/Reifen) befestigt ist und die von einem Antriebsmotor 4 beispielsweise über einen Riemenantrieb in Rotation versetzbar ist. Dargestellt ist eine Auswuchtmaschine mit horizontaler Wuchtspindel 2, bei Bedarf kann auch eine übliche Auswuchtmaschine mit vertikaler Wuchtspindel eingesetzt werden, was z.B. in Reifenmontierstrassen vorteilhaft ist. Die Wuchtspindel 2 ist in zwei Schwingbrücken gelagert, die ihrerseits über federnde Elemente gegen den Maschinenrahmen 5 abgestützt sind. Die Schwingungen der Schwingbrücken in der die Wuchtspindelachse aufnehmenden Horizontalebene (im dargestellten Beispiel) bei Rotation der Radeinheit 3 werden von Aufnehmern 6, 6' erfaßt und unter Heranziehung von rotorsynchronen Impulsen eines Winkellagengebers 7 in einer nicht dargestellten Auswerteeinheit in bekannter Weise ausgewertet. Die Aufnehmer 6, 6' erfassen die Schwingungen der in den beiden Meßebenen angeordneten Schwingbrücken. Als Ergebnis erhält man Kompensationsmassen nach Größe und Winkellage für die jeweiligen Ausgleichsebenen des Fahrzeugrades. Die Kompensationsmassen werden beispielsweise als Bleigewichte 31 am Felgenhorn des Fahrzeugrads befestigt

Am Maschinenrahmen 5 ist eine Belastungseinrichtung 10 angeordnet, mit der eine Belastung auf die Lauffläche 11 des Reifens rechtwinklig zur Wuchtspindelachse ausgeübt werden kann. Zur Aufbringung der Belastung ist eine Rolleneinrichtung 12 vorgesehen, die eine Vielzahl von im Gehäuse der Einrichtung gelagerten Rollen 13 aufweist. Diese nachfolgend als Rollenschuh 20 bezeichnete Einrichtung ist über eine Feder 14 mit parallel geschaltetem Dämpfer 15 in Belastungsrichtung am Abstützteil 16 des Rahmens der Belastungseinrichtung 10 abgestützt. Das Abstützteil 16 ist gegenüber dem Rahmen in Belastungsrichtung verstellbar, während der Messungen aber arretiert. Die Federrate und Dämpfung der Feder- und Dämpfungsvorrichtung für den Rollenschuh 20 entsprechen im wesentlichen der Federrate und Dämpfung der Radaufhängung des Fahrzeugs.

Der Rollenschuh 20 ist über eine reibungsarme Lagerung 17, im dargestellten Beispiel eine Rollen- oder Kugellagerung, gegenüber dem Rahmen der Belastungseinrichtung 10 beweglich. In dem Rollenschuh 20 sind in der dargestellten Ausführungsform fünf Rollen 13 mit ihren Drehachsen parallel zueinander gelagert, wobei alle Drehachsen in einer gemeinsamen Ebene liegen. Einzelfallabhängig kann auch eine andere Rollenzahl vorgesehen werden. Die gemeinsame Ebene verläuft parallel zur Wuchtspindelachse und senkrecht zur Belastungsrichtung. In der dargestellten Ausführungsform ist der Rollenschuh 20 so ausgerichtet, daß die Rollenachsen parallel zur Wuchtspindelachse verlaufen. Der Rollenschuh 20 ist um die Meßrichtungsachse schwenkbar, so daß die Rollenachsen in ihrer Ebene auch im Winkel zu der Wuchtspindelachse angeordnet werden können. Die träge Masse des Rollenschuhs 20 ist im wesentlichen wie die ungefederte Masse der Radeinheit 3 samt ungefederter Anbauteile (Nabe und Bremse, Radträger) gewählt, da so die Verhältnisse des Fahrbetriebes optimal nachgebildet werden.

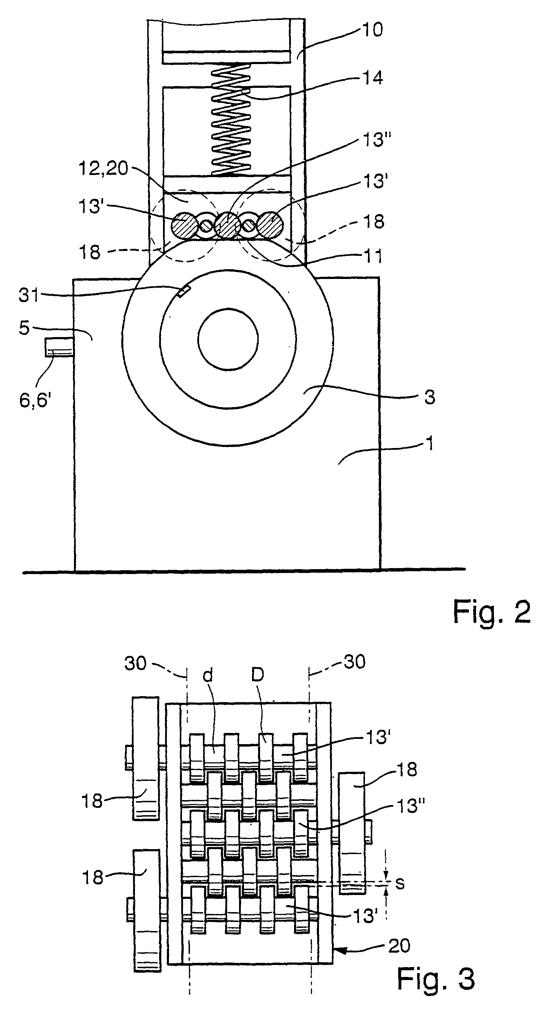

Wie aus Fig. 3 ersichtlich weisen die Rollen 13 längs ihrer Achse Abschnitte größeren und Abschnitte kleineren Durchmessers (D,d) auf, die etwa gleiche axiale Erstreckung haben. Dargestellt sind aus Gründen der zeichnerischen Vereinfachung Rollen mit lediglich 4 bzw. 3 Abschnitten größeren Durchmessers; es können jedoch mehr oder auch weniger als 4 bzw. 3 Abschnitte mit größerem Durchmesser vorgesehen sein. Stichpunktiert und mit den Bezugsziffern 30 ist die Reifenbreite angedeutet. Die Anordnung der Rollen 13 im Rollenschuh 20 ist in der Fig. 3 als Draufsicht auf die Rollen 13 dargestellt. Den Abschnitten größeren Durchmessers D einer Rolle 13 sind Abschnitte kleineren Durchmessers d der benachbarten Rolle 13 zugeordnet, so daß der Achsabstand zweier benachbarter Rollen gleich D/2 + d/2 + S sein kann, wobei S der Abstand der Umfangsflächen aufgrund der berührungsfreien Anordnung der benachbarten Rollen 13 ist. Damit ergibt sich eine sehr kompakte Anordnung bei möglichst großem Rollendurchmesser der die Lauffläche 11 des Reifens berührenden Rollenabschnitte und eine Beaufschlagung der Lauffläche 11 an vielen in einer Ebene liegenden Stellen, so daß der Aufstand des Reifens auf der Fahrbahnoberfläche optimal nachgebildet ist.

Damit die Verhältnisse des Fahrbetriebs möglichst gut nachgebildet werden, weist zumindest eine der Rollen 13 des Rollenschuhs 20 eine größere effektive Drehmasse auf, die im Falle von nur einer Rolle mit größerer Drehmasse zusammen mit der Drehmasse der restlichen Rollen der auf den Laufflächenradius reduzierten Drehmasse des Fahrzeugrades entspricht. Im dargestellten Beispiel weisen drei der fünf Rollen 13 eine größere Drehmasse auf, die dazu jeweils am Ende einen Abschnitt mit größerem Massenträgheitsmoment 18 haben. Insgesamt entspricht die effektive Drehmasse aller beteiligter Rollen der reduzierten Drehmasse des Fahrzeugrades. Die beiden in Laufrichtung des Reifens außen liegenden Rollen 13' haben den Abschnitt mit größerem Durchmesser 18 an ihrem bezüglich der Auswuchtmaschine inneren Enden, während die mittlere Rolle 13'' diesen am von der Auswuchtmaschine wegweisenden Ende hat. Es kann jedoch auch die umgekehrte Anordnung vorgenommen werden. Durch diese Ausgestaltung kann der Durchmesser der Abschnitte 18 mit größerem Massenträgheitsmoment möglichst groß gewählt werden. Die Abschnitte 18 größeren Massenträgheitsmoments können auch axial versetzt angeordnet werden, um einen möglichst großen Durchmesser zu ermöglichen.

Um die durch eine Radeinheit 3 eines Fahrzeugs hervorgerufenen Vibrationen zu verringern, wird die Radeinheit 3 auf die Wuchtspindel 2 der Auswuchtmaschine 1 aufgespannt. Die Radeinheit 3 wird durch den Motor 4 auf eine Drehzahl gebracht, bei der störende Vibrationen bemerkbar sind (kritische Drehzahl). Diese Drehzahl liegt im allgemeinen im Bereich von etwa 800 Umdrehungen pro Minute, was etwa einer Fahrgeschwindigkeit von 90 bis 100 km/h entspricht. Es können jedoch auch andere Drehzahlen oder Drehzahlbereiche untersucht werden, bei denen kritische Vibrationen auftreten oder zu erwarten sind. Der Rollenschuh 20 der Belastungseinrichtung 10 wird aus dem nicht dargestellten Ruhezustand in die in den Figuren 1 und 2 gezeigte Anpreßstellung gebracht, wobei die Abplattung des Reifens durch eine vorgegebene Fahrzeugbeladung bestimmt wird. Die Fahrzeugbeladung kann durch Änderung der Lage des Abstützteils 16 für die Feder 14 und die Dämpfung 15 berücksichtigt werden. Es kann jedoch auch vorgesehen werden, daß die Belastungsrichtung 10 schon vor oder während der Beschleunigungsphase der Radeinheit 3 die Radeinheit 3 beaufschlagt. Die Rollen 13 des Rollenschuhs 20 rotieren nun zusammen mit ihren Abschnitten größeren Massenträgheitsmoments 18 mit einer durch die Drehzahl der Radeinheit 3 vorgegebenen Drehzahl. Die Messung der Schwingungen der Schwingbrücken über die Aufnehmer 6, 6' und ihre anschließende Auswertung unter Heranziehung des rotorsynchronen Bezugssignals des Winkellagengebers 7 in der Auswerteeinheit der Auswuchtmaschine 1 liefert pro Ausgleichsebene des Fahrzeugrades eine Kompensationsmasse nach Größe und Winkellage, mit der die Vibrationen im Fahrbetrieb entscheidend verringert werden. Die Kompensationsmassen werden beispielsweise als Bleigewichte 31 am Felgenhorn des Fahrzeugrades befestigt.

Es ist selbstverständlich möglich, auf der Auswuchtmaschine auch ein belastungsfreies, d.h. ohne Einwirkung der Belastungseinrichtung erfolgendes, herkömmliches Auswuchten durchzuführen. Es ist als besonders vorteilhaft hervorzuheben, daß beide Messungen (belastungsfrei und mit Belastung) mit der gleichen Auswerteeinheit auf gleiche Weise ausgewertet werden.

Es ist weiter möglich, die Anpreßkraft der Belastungseinrichtung 10 im wesentlichen konstant zu halten und über die Ermittlung der Verschiebungen des Rollenschuhs 20 gegenüber dem Rahmen der Belastungseinrichtung 10 und damit der Wuchtspindelachse 2 den radialen Schlag der Radeinheit 3 während einer Rotation unter realitätsnaher Belastung zu messen. Umgekehrt ist es möglich, den Rollenschuh 20 zu arretieren und die Schwankungen der Reaktionskräfte zu ermitteln.

Weiter ist es möglich, daß die Anpreßkraft und die Bewegungen des Rollenschuhs programmgesteuert vorgegeben werden, um so die Verhältnisse eines Fahrabschnitts des Fahrzeugs nachzubilden.

## Patentansprüche

1. Verfahren zur Verringerung von durch eine Radeinheit (3) eines Fahrzeuges hervorgerufenen Vibrationen, bei dem die Radeinheit (3) aus Radfelge und Reifen in einer Meßeinrichtung (1) zur Ermittlung von Schwingungen rotierbar gelagert wird und über eine federnd abgestützte Belastungseinrichtung (10, 12, 20) definiert kraftbeaufschlagt wird und wobei durch die Auslegung und Einwirkung der Belastungseinrichtung (10, 12, 20) Verhältnisse am Fahrzeug für die Messung nachgebildet werden und wobei die mittels der Messeinrichtung (1) erfassbaren Schwinggrößen in einem Drehzahlbereich der Radeinheit ermittelt werden, der einem Drehzahlbereich im Fahrbetrieb, in welchem Vibrationen auftreten können, entspricht, und bei dem aus den ermittelten Schwinggrößen Kompensationsmassen nach Größe und Winkellage ermittelt werden, **dadurch gekennzeichnet, daß** die federnde Abstützung der Belastungseinrichtung (10, 12, 20) eine Dämpfung aufweist und daß Federung und Dämpfung dieser Abstützung der Federung und Dämpfung der Radaufhängung im wesentlichen entsprechend gewählt wird und daß mehrere rotierbare Belastungselemente an der Belastungseinrichtung (10, 12, 20) vorgesehen sind, wobei diese derart angeordnet werden, daß sie die Reifenlauffläche in einer Ebene kontaktieren.

2. Verfahren nach Anspruch 1, **dadurch gekennzeichnet, daß** der Belastungseinrichtung (10, 12, 20) eine effektive Drehmasse zugeordnet wird, die der auf den Laufflächenradius reduzierten Drehmasse des Fahrzeugrades entspricht.

3. Verfahren nach einem oder beiden der vorhergehenden Ansprüche, **dadurch gekennzeichnet, daß** die träge Masse der Belastungseinrichtung (12, 20) entsprechend der ungefederten Masse der Radeinheit samt ungefederter Anbauteile, z.B. Nabe und Bremse, Radräger, gewählt wird.

4. Verfahren nach einem oder mehreren der vorhergehenden Ansprüche, **dadurch gekennzeichnet, daß** die Anpreßkraft der Belastungseinrichtung (10, 12, 20) in Nachbildung des Verhältnisses am Fahrzeug gesteuert wird.

5. Verfahren nach Anspruch 4, **dadurch gekennzeichnet, daß** die Anpreßkraft gleich Null gesetzt wird.

6. Einrichtung zur Verringerung von durch eine Radeinheit eines Fahrzeuges hervorgerufenen Vibrationen, die eine Meßeinrichtung (1) zur Ermittlung von Vibrationen einer in der Meßeinrichtung (1) drehbar gelagerten Radeinheit (3) aus Radfelge und Reifen sowie eine Auswerteeinheit, mit der aus den ermittelten Schwinggrößen Kompensationsmassen nach Größe und Winkellage ermittelt werden, aufweist sowie eine federnd abgestützten Belastungseinrichtung (10, 12, 20) zur definierten Kraftbeaufschlagung der Radeinheit (3), **dadurch gekennzeichnet, daß** die Belastungseinrichtung (10, 12, 20) als Rolleneinrichtung (12, 20) mit mehreren Rollen ausgebildet ist, die gegen die Reifenlauffläche der Radeinheit (3) anlegbar ist, wobei die Rolleneinrichtung (12, 20) über eine Feder- und Dämpfungsvorrichtung (14, 15), deren Eigenschaften der Federung und Dämpfung der Radaufhängung des Fahrzeugs im wesentlichen entsprechen, gelagert ist und die Rollen (13, 13', 13") die Reifenlauffläche in einer Ebene kontaktieren.

7. Einrichtung nach Anspruch 6, **dadurch gekennzeichnet, daß** die Rollen (13, 13', 13") in einem Rollenschuh (20) gelagert sind und Drehachsen aufweisen, die parallel zur Drehachse der Radeinheit (3) ausrichtbar sind.

8. Einrichtung nach Anspruch 6 oder Anspruch 7, **dadurch gekennzeichnet, daß** die Rollen (13, 13', 13") Abschnitte größeren und kleineren Durchmessers (D, d) aufweisen, die kämmend mit zugeordneten Abschnitten kleineren und größeren Durchmessers (d, D) der jeweils benachbarten Rolle ineinandergreifen.

9. Einrichtung nach Anspruch 8, **dadurch gekennzeichnet, daß** die Abschnitte größeren Durchmessers durch drehbar gelagerte Rollringe gebildet sind.

10. Einrichtung nach einem oder mehreren der vorhergehenden Ansprüche, **dadurch gekennzeichnet, daß** zumindest eine Rolle (13, 13', 13") zumindest einen Abschnitt (8) mit größerem Massenträgheitsmoment aufweist, wobei die effektive Drehmasse der Rolle bzw. Rollen (13, 13', 13") der auf den Laufflächenradius reduzierten Drehmasse des Fahrzeugrades entspricht.

11. Einrichtung nach Anspruch 10, **dadurch gekennzeichnet, daß** der Abschnitt (8) mit größerem Massenträgheitsmoment am Ende der Rolle (13, 13', 13") angeordnet ist und die Abschnitte (8) mit größerem Massenträgheitsmoment von benachbarten Rollen (13', 13") an jeweils anderen Enden der Rollen (13', 13") angeordnet sind.

12. Einrichtung nach einem oder mehreren der vorhergehenden Ansprüche, **dadurch gekennzeichnet, daß** jede Rolle (13, 13', 13") unabhängig von anderen Rollen (13, 13', 13") drehbar ist.

13. Einrichtung nach einem oder mehreren der vorhergehenden Ansprüche, **dadurch gekennzeichnet, daß** mehrere Rollen bezüglich ihres Drehverhaltens gekoppelt sind.

14. Einrichtung nach einem oder mehreren der vorhergehenden Ansprüche, **dadurch gekennzeichnet, daß** ein Antrieb für eine oder mehrere Rollen vorgesehen ist.

15. Einrichtung nach einem oder mehreren der vorhergehenden Ansprüche, **dadurch gekennzeichnet, daß** die träge Masse der Rolleneinrichtung (12) der ungefederten Masse der Radeinheit samt ungefederter Anbauteile, z.B. Nabe und Bremse, Radträger, (3) entspricht.

16. Einrichtung nach einem oder mehreren der vorhergehenden Ansprüche, **dadurch gekennzeichnet, daß** die Anpreßkraft der Belastungseinrichtung (10, 12, 20) in Nachbildung des Verhältnisses am Fahrzeug steuerbar oder wegnehmbar ist.

17. Verfahren nach einem oder mehreren der vorhergehenden Ansprüche, **dadurch gekennzeichnet, daß** die Anpreßkraft der Belastungseinrichtung (10, 12, 20) im wesentlichen konstant gehalten wird und Verschiebungen der Belastungseinrichtung (10, 12, 20) gegen die Rotationsachse der rotierenden Radeinheit (3) ermittelt und ausgewertet werden.

18. Verfahren nach einem oder mehreren der vorhergehenden Ansprüche, **dadurch gekennzeichnet, daß** die Lage der Belastungseinrichtung (10, 12, 20) zur Rotationsachse der Radeinheit (3) nach der Anpressung arretiert wird und Reaktionskräfte an der Abstützung der rotierenden Radeinheit (3) ermittelt und ausgewertet werden.

## Claims

1. Method of reducing vibrations caused by a wheel unit (3) of a vehicle, whereby the wheel unit (3) comprising wheel rim and tyre is mounted rotatably in a measuring device (1) for determining oscillations and is acted upon by a defined force via a resiliently supported loading device (10, 12, 20) and wherein by virtue of the design and action of the loading device (10, 12, 20) conditions at the vehicle are simulated for the measurement and wherein the oscillation quantities detectable by means of the measuring device (1) are determined in a rotational speed range of the wheel unit, which corresponds to a rotational speed range during travel, within which vibrations may arise, and whereby from the determined oscillation quantities the size and angular position of compensating masses are determined, **characterized in that** the resilient support of the loading device (10, 12, 20) comprises a damping and that the springiness and damping of said support is selected so as to correspond substantially to the springiness and damping of the wheel suspension and that a plurality of rotatable loading elements are provided on the loading device (10, 12, 20), wherein said elements are disposed in such a way that they contact the tyre tread in a plane.

2. Method according to claim 1, **characterized in that** associated with the loading device (10, 12, 20) is an effective rotational mass, which corresponds to the rotational mass of the vehicle wheel reduced to the tread radius.

3. Method according to one or both of the preceding claims, **characterized in that** the inert mass of the loading device (12, 20) is selected to as to correspond to the non-sprung mass of the wheel unit plus non-sprung add-on parts, e.g. hub and brake, wheel carrier.

4. Method according to one or more of the preceding claims, **characterized in that** the application force of the loading device (10, 12, 20) is controlled in simulation of the condition at the vehicle.

5. Method according to claim 4, **characterized in that** the application force is set equal to zero.

6. Device for reducing vibrations caused by a wheel unit of a vehicle, comprising a measuring device (1) for determining vibrations of a wheel unit (3), which is composed of wheel rim and tyre and is mounted rotatably in the measuring device (1), as well as an evaluation unit for determining from the determined oscillation quantities the size and angular position of compensating masses, as well as a resiliently supported loading device (10, 12, 20) for acting with a defined force upon the wheel unit (3), **characterized in that** the loading device (10, 12, 20) takes the form of a roller device (12, 20) having a plurality of rollers, which is pressable against the tyre tread of the wheel unit (3), wherein the roller device (12, 20) is mounted via a spring and damping apparatus (14, 15), the properties of which correspond substantially to the springiness and damping of the wheel suspension of the vehicle, and the rollers (13, 13', 13") contact the tyre tread in a plane.

7. Device according to claim 6, **characterized in that** the rollers (13, 13', 13") are mounted in a roller shoe (20) and have axes of rotation, which are alignable parallel to the axis of rotation of the wheel unit (3).

8. Device according to claim 6 or claim 7, **characterized in that** the rollers (13, 13', 13") have portions of greater and smaller diameter (D, d), which intermesh with associated portions of smaller and greater diameter (d, D) of the respective adjacent roller.

9. Device according to claim 8, **characterized in that** the portions of greater diameter are formed by rotatably mounted rolling rings.

10. Device according to one or more of the preceding claims, **characterized in that** at least one roller (13, 13', 13") has at least one portion (8) with a greater mass moment of inertia, wherein the effective rotational mass of the roller or rollers (13, 13', 13") corresponds to the rotational mass of the vehicle wheel reduced to the tread radius.

11. Device according to claim 10, **characterized in that** the portion (8) with a greater mass moment of inertia is disposed on the end of the roller (13, 13', 13") and the portions (8) with a greater mass moment of inertia of adjacent rollers (13', 13") are disposed on, in each case, other ends of the rollers (13', 13").

12. Device according to one or more of the preceding claims, **characterized in that** each roller (13, 13', 13") is rotatable independently of other rollers (13, 13', 13").

13. Device according to one or more of the preceding claims, **characterized in that** a plurality of rollers are coupled in respect of their rotational behaviour.

14. Device according to one or more of the preceding claims, **characterized in that** a drive is provided for one or more rollers.

15. Device according to one or more of the preceding claims, **characterized in that** the inert mass of the roller device (12) corresponds to the non-sprung mass of the wheel unit plus non-sprung add-on parts, e.g. hub and brake, wheel carrier, (3).

16. Device according to one or more of the preceding claims, **characterized in that** the application force of the loading device (10, 12, 20) is controllable in simulation of the condition at the vehicle or removable.

17. Method according to one or more of the preceding claims, **characterized in that** the application force of the loading device (10, 12, 20) is kept substantially constant and displacements of the loading device (10, 12, 20) towards the axis of rotation of the rotating wheel unit (3) are determined and evaluated.

18. Method according to one or more of the preceding claims, **characterized in that** the position of the loading device (10, 12, 20) relative to the axis of rotation of the wheel unit (3) is locked after application, and reaction forces at the support of the rotating wheel unit (3) are determined and evaluated.

## Revendications

1. Procédé pour réduire les vibrations provoquées par une unité de roue (3) d'un véhicule, dans lequel l'unité de roue (3), constituée de la jante et du pneu, est montée tournante dans un dispositif de mesure pour déterminer les vibrations, et est soumise à une force définie au moyen d'un dispositif de charge (10, 12, 20) soutenu élastiquement, et dans lequel, par le dimensionnement et l'action de dispositif de charge (10, 12, 20), on simule des conditions sur le véhicule, pour la mesure, et dans lequel les grandeurs d'oscillations, qui peuvent être détectées au moyen du dispositif de mesure (1), sont déterminées dans un domaine de vitesse de rotation de l'unité de roue qui correspond à un domaine de vitesse de rotation pendant la marche, dans lequel peuvent se produire des vibrations, et pour lequel on détermine, à partir des grandeurs d'oscillations déterminées, la taille et la position angulaire de masses de compensation, **caractérisé en ce que** le soutien élastique du dispositif de charge (10, 12, 20) comporte un amortissement et **en ce que** la caractéristique de ressort et l'amortissement de ce soutien sont choisis sensiblement correspondants à la caractéristique de ressort et à l'amortissement de la suspension de roue, et **en ce que** plusieurs éléments de charge tournants sont prévus sur le dispositif de charge (10, 12, 20), ceux-ci étant disposés de manière qu'ils soient en contact dans un plan avec la surface de roulement du pneu.

2. Procédé selon la revendication 1, **caractérisé en ce qu'**au dispositif de charge (10, 12, 20) est associée une masse rotative effective qui correspond à la masse rotative de la roue du véhicule, réduite au rayon de la surface de roulement.

3. Procédé selon une ou deux des revendications précédentes, **caractérisé en ce que** la masse inerte du dispositif de charge (10, 12, 20) est choisie conformément à la masse non suspendue de l'unité de roue avec éléments rapportés non suspendus, par exemple moyeu et frein, support de roue.

4. Procédé selon une plusieurs des revendications précédentes, **caractérisé en ce que** la force de pression du dispositif de charge (10, 12, 20) est commandée de manière à simuler la situation sur le véhicule.

5. Procédé selon la revendication 4, **caractérisé en ce que** la force de pression est égale à zéro.

6. Dispositif pour réduire les vibrations provoquées par une unité de roue d'un véhicule, qui comporte un dispositif de mesure (1) pour déterminer les vibrations d'une unité de roue (3), montée tournante dans le dispositif de mesure (1), constituée de la jante et du pneu, ainsi qu'une unité d'exploitation au moyen de laquelle on détermine la taille et la position angulaire de masses de compensation, à partir des grandeurs d'oscillations déterminées, ainsi qu'un dispositif de charge (10, 12, 20) soutenu élastiquement pour soumettre l'unité de roue (3) à une force définie, **caractérisé en ce que** le dispositif de charge (10, 12, 20) est réalisé en tant que dispositif à rouleaux (12, 20) comportant plusieurs rouleaux, qui peuvent s'appliquer contre la surface de roulement du pneu de l'unité de roue (3), le dispositif à rouleaux (12, 20) étant monté, par l'intermédiaire d'un dispositif de suspension et d'amortissement (14, 15) dont les propriétés correspondent sensiblement à l'élasticité et à l'amortissement de la suspension de roue du véhicule, et les rouleaux (13, 13', 13") étant en contact dans un plan avec la surface de roulement du pneu.

7. Dispositif selon la revendication 6, **caractérisé en ce que** les rouleaux (13, 13', 13") sont montés dans un patin à rouleaux (20) et présentent des axes de rotation qui peuvent être orientés parallèlement à l'axe de rotation de l'unité de roue (3).

8. Dispositif selon la revendication 6 ou la revendication 7, **caractérisé en ce que** les rouleaux (13, 13', 13") comportent des parties de plus grand et de plus petit diamètre (D, d) qui engrènent avec des parties associées de plus petit et de plus grand diamètre (d, D) du rouleau voisin respectif.

9. Dispositif selon la revendication 8, **caractérisé en ce que** les parties de plus grand diamètre sont formées par des anneaux de roulement montés tournants.

10. Dispositif selon une ou plusieurs des revendications précédentes, **caractérisé en ce qu'**au moins un rouleau (13, 13', 13") comporte au moins une partie (8) présentant un plus grand moment d'inertie de masse, la masse rotative effective du ou des rouleau(x) (13, 13', 13") correspondant à la masse rotative réduite au rayon de la surface de roulement de la roue du véhicule.

11. Dispositif selon la revendication 10, **caractérisé en ce que** la partie (8) présentant un plus grand moment d'inertie de masse est disposée à l'extrémité du rouleau (13, 13', 13") et les parties (8) présentant un plus grand moment d'inertie de masse de rouleaux (13', 13") voisins sont disposées aux autres extrémités des rouleaux (13', 13").

12. Dispositif selon une ou plusieurs des revendications précédentes, **caractérisé en ce que** chaque rouleau (13, 13', 13") peut tourner indépendamment d'autres rouleaux (13, 13', 13").

13. Dispositif selon une ou plusieurs des revendications précédentes, **caractérisé en ce que** plusieurs rouleaux sont accouplés en ce qui concerne leur comportement en rotation.

14. Dispositif selon une ou plusieurs des revendications précédentes, **caractérisé en ce qu'**il est prévu un dispositif d'entraînement pour un ou plusieurs rouleaux.

15. Dispositif selon une ou plusieurs des revendications précédentes, **caractérisé en ce que** la masse inerte du dispositif à rouleaux (12) correspond à la masse non suspendue de l'unité de roue avec éléments rapportés non suspendus, par exemple moyeu et frein, support de roue (3).

16. Dispositif selon une ou plusieurs des revendications précédentes, **caractérisé en ce que** la force de pression du dispositif de charge (10, 12, 20) peut être commandée ou supprimée de manière à simuler la situation sur le véhicule.

17. Procédé selon une ou plusieurs des revendications précédentes, **caractérisé en ce que** la force de pression du dispositif de charge (10, 12, 20) est maintenue sensiblement constante et des déplacements du dispositif de charge (10, 12, 20) par rapport à l'axe de rotation de l'unité de roue (3) tournante sont déterminés et exploités.

18. Procédé selon une ou plusieurs des revendications précédentes, **caractérisé en ce que** la position du dispositif de charge (10, 12, 20) par rapport à l'axe de rotation de l'unité de roue (3) est bloquée après la pression, et les forces de réaction sur l'appui de l'unité de roue (3) tournante sont déterminées et exploitées.
